# EUROPÄISCHE PATENTSCHRIFT

(11) **EP 3 834 595 B1**
(45) Veröffentlichungstag und Bekanntmachung des Hinweises auf die Patenterteilung: **07.05.2025**
(21) Anmeldenummer: 20401063.1
(22) Anmeldetag: 03.12.2020
(51) Int. Cl.: A01C 5/06, A01B 23/06

(54) **SCHEIBENSCHAR**
DISK COULTER
DISQUE DE CHARRUE

(30) Priorität: 10.12.2019 DE 102019133770
(43) Veröffentlichungstag der Anmeldung: 16.06.2021
(73) Patentinhaber: Amazonen-Werke H. Dreyer SE & Co. KG, 49205 Hasbergen (DE)
(72) Erfinder: Bohlen, Eike, 28215 Bremen (DE)

(56) Entgegenhaltungen:
- EP-A1- 0 170 140
- DE-A1- 19 653 014
- US-A- 785 865
- US-A- 808 021

## Beschreibung

Die Erfindung betrifft ein Scheibenschar gemäß dem Oberbegriff des Patentanspruches 1 und ein landwirtschaftliches Arbeitsgerät gemäß dem Oberbegriff des Patentanspruches 11.

In einer Vielzahl von Anwendungsfällen, insbesondere in der Landwirtschaft, werden zur Bearbeitung einer landwirtschaftlichen Nutzfläche, insbesondere einem Acker, Arbeitsgeräte mit zumindest einem an einem Halter angeordneten Schar eingesetzt. Die Arbeitsgeräte sind hierbei vorzugsweise mittels eines landwirtschaftlichen Schleppers ziehbar und/oder an einem solchen anbaubar ausgeführt. Zum Einsatz für derartige Anwendungsfälle können beispielhaft landwirtschaftliche Sä- und/oder Bodenbearbeitungsgeräte, insbesondere Bodenbearbeitungsgeräte mit zumindest einem in den Boden eingreifenden Werkzeug, genannt werden. Zu den Werkzeugen der Bodenbearbeitungsgeräte zählen neben den Scharen, insbesondere als Scheibenschare ausgebildete Schare, beispielsweise auch Kolterscheiben.

Aufgrund von möglichen Anhaftungen, beispielsweise in Form von Verschmutzungen, werden an gattungsgemäßen Scharen, insbesondere Scheibenscharen, Abstreiferelemente eingesetzt die dem Schar zugeordnet sind. Die Abstreiferelemente sind dabei derartig ausgebildet, dass diese zumindest teilweise gegen die Oberfläche des in den Boden eingreifenden Werkzeuges andrückbar sind und die Anhaftungen somit zumindest teilweise von wenigstens einer Seite des Scheibenschars mittels der Abstreiferelemente lösbar sind.

Ein derartiges Scheibenschar ist in der DE 196 53 014 A1 beschrieben. Das Scheibenschar umfasst zumindest eine drehbar gelagerte Scheibe die an zumindest einem Scharhalter angeordnet ist. Dabei sind zumindest zwei Abstreiferelemente die, insbesondere U-förmig, zu einer Abstreiferbaugruppe zusammengefasst sind, jeweils einer Seite der Scheibe zugeordnet. Die Abstreiferelemente sind hierbei mittels zumindest einer Spannvorrichtung, insbesondere mit einstellbarem Druck, gegen die Scheibe zusammendrückbar ausgebildet.

Nachteilig an diesem Aufbau ist unter anderem, dass ein mittels der Spannvorrichtung, insbesondere einstellbarer, wirkender Druck der Abstreiferelemente auf die Scheibe aufgrund von beispielsweise Verschleiß zumindest eines Abstreiferelementes und/oder der Scheibe sukzessive nachlässt. Somit ist ein nahezu konstantes Abtragen der zuvor beschriebenen Anhaftungen über einen längeren Zeitraum bisher nur mit besonders großem Aufwand erreichbar. Es erfordert bisher ein regelmäßiges Nachstellen des Drucks, mittels der Spannvorrichtungen, durch einen Bediener. Scheiben eines Schars die zusätzlich Unebenheiten entlang der Geometrie aufweisen, können bisher ebenfalls nur mit einem stark erhöhten Aufwand zuverlässig von Anhaftungen befreit werden.

Um den mit steigender Betriebszeit nachlassenden Druck der Abstreiferelemente auf die Scheibe entgegenzuwirken, ist es wie in der US 785 865 A beschrieben bekannt, dass die Spannvorrichtung mittels zumindest eines Federelementes derart ausgebildet ist, dass sie dazu eingerichtet ist, den von den Abstreiferelementen ausgeübten Druck auf die Scheibe selbsttätig nachzustellen.

Weitere ähnliche Abstreiferelemente sind aus US 808 021 A und EP 0 170 140 A1 bekannt. Darüber hinaus wirken sich bei den bisherigen Lösungen, die aus dem Stand der Technik bekannt sind, Verschleißerscheinungen negativ auf den an den Scheiben anliegenden Bereich, insbesondere der Geometrie, der Abstreiferelemente aus.

Die Abstreiferelemente werden zusätzlich von im Acker befindlichem festem Material, wie beispielsweise Steine, und/oder von stark verdichtetem Boden besonders belastet. Die Standzeit und/oder Einsatzzeit der Abstreiferelemente sind hierdurch deutlich begrenzt und müssen somit in regelmäßigen Abständen erneuert werden.

Die der Erfindung zugrunde liegende Aufgabe besteht somit darin, ein Scheibenschar so zu gestalten, dass eine Anpassung und/oder eine Montage des Scheibenschars, insbesondere der Abstreiferbaugruppe, in einfacher Weise ermöglicht ist.

Diese Aufgabe wird erfindungsgemäß durch die kennzeichnenden Merkmale des Anspruch 1 gelöst.

Infolge dieser Anordnung ist unter Ausnutzung einer Federkennlinie, insbesondere zumindest einer linearen Federrate, des zumindest einen Federelementes eine Spannvorrichtung geschaffen, mittels derer zumindest zwei Abstreiferelemente mit einem zumindest nahezu konstanten Druck an jeweils einer Seite wenigstens einer Scheibe anliegen. Je nach Anwendungsfall, insbesondere des verwendeten Scheibenschars, ist bevorzugt ein entsprechender Druck mittels der Spannvorrichtung manuell und/oder automatisiert einstellbar. Das Federelement ist derartig innerhalb der Spannvorrichtung angeordnet, dass das Federelement hierbei gegenüber der Scheibe und/oder des zumindest einen Abstreiferelementes vorspannbar ist. Je nach Wahl und/oder Auslegung der Federkennlinie, insbesondere Federrate, des Federelementes und dem Grad der Vorspannung, ist eine zwischen dem Abstreiferelement und der Scheibe angreifenden Kraft besonders einfach reduzierbar oder erhöhbar. Das Federelement ist hierbei dazu eingerichtet, die zumindest zwei Abstreiferelemente wenigstens einer Abstreiferbaugruppe zumindest teilweise zueinander hin zusammen zu drücken.

Die Federkennlinie, insbesondere Federrate, des Federelementes stellt erfindungsgemäß das Verhältnis zumindest einer, vorzugsweise von dem Federelement ausgehenden, Kraft in Abhängigkeit einer Auslenkung oder Kompression des zumindest einen Federelementes dar. Darüber hinaus ist die Federkennlinie neben einem einzigen Federelement mit einer Federrate aus zumindest einem weiteren Federelement mit der gleichen oder einer abweichenden Federrate zusammensetzbar. Das zumindest eine weitere Federelement kann hierbei als eine zum ersten Federelement parallel oder in reihe angeordnetes Federelement ausgeführt sein. Bei einer parallelen Anordnung von zumindest zwei Federelementen weist die Federkennlinie eine größere Federrate auf, als die höchste Federrate der zumindest zwei Federelemente. Bei zumindest zwei in reihe angeordneten Federelementen weist die Federkennlinie eine kleinere Federrate auf, als die niedrigste Federrate der zumindest zwei Federelemente.

Gemäß einer Ausführungsform ist das zumindest eine Federelement als eine Torsionsfeder, insbesondere Schraubenfeder, ausgebildet. Ein als Torsionsfeder ausgebildetes Federelement weist den entscheidenden Vorteil auf, dass die Spannvorrichtung so besonders einfach realisierbar ist. Darüber hinaus sind Torsionsfedern mit nahezu allen erdenklichen Federraten erhältlich. Alternativ oder zusätzlich ist das Federelement als Blattfeder und/oder Tellerfeder ausgebildet. Mit einer als Blatt- und/oder Tellerfeder ausgebildetes Federelement ist eine zur Torsionsfeder vergleichsweise besonders hohe Federrate, bei zumindest nahezu übereinstimmenden Abmessungen, erreichbar. Alternativ oder zusätzlich sind Spannvorrichtungen denkbar, die zumindest ein aus einem elastischen Kunststoff, insbesondere als Gummifeder, ausgebildetes Federelement umfassen. Diese weisen den Vorteil auf, dass diese neben den federnden Eigenschaften außerdem dämpfende Eigenschaften, insbesondere gegenüber Schwingungen, aufweisen. Darüber hinaus sind Gummifedern zumindest nahezu verschleißfrei und/oder unempfindlich gegenüber äußeren Verschmutzungen.

Des Weiteren ist eine Spannvorrichtung denkbar, die zumindest teilweise aus zumindest zwei unterschiedlichen Federelementen zusammensetzbar ist. Hierbei sind die einzelnen Vorteile der jeweiligen Federarten in Kombination ausnutzbar.

In einer bevorzugten Ausführungsform des erfindungsgemäßen Scheibenschars umfasst die Spannvorrichtung neben dem zumindest einen Federelement zumindest eine Schraube und eine Schraubenmutter, wobei das Federelement vorzugsweise zwischen dem zumindest einen Abstreiferelement und der Schraube und/oder der Schraubenmutter angeordnet ist. Ein erstes Ende des Federelementes ist hierbei der Schraube, insbesondere dem Schraubenkopf, und/oder der Schraubenmutter zugewandt, wobei das zweite Ende des Federelementes dem zumindest einen Abstreiferelement zugewandt ist. Durch die Auslegung der Gewindesteigung der Schraubverbindungen ist die Genauigkeit des einstellbaren Drucks besonders variabel anpassbar. Hierbei sind beispielsweise Feingewinde für eine besonders genaue Einstellung der Druckkraft und/oder Standardgewinde für besonders große Vorspannkräfte verwendbar. Außerdem ist hierbei die Anordnung des zumindest einen Federelementes zwischen dem zumindest einen Abstreiferelement und der zumindest einen Schraubenmutter besonders bevorzugt. Die Schraubenmutter ist außerdem als eine Sechskantschraubenmutter und/oder vorzugsweise als Flügelmutter und/oder anderen Varianten von Schraubenmuttern auslegbar. Hierbei ist mittels einer mit einem Werkzeug anziehbaren Sechskantschraubenmutter eine weiter gesteigerte Vorspannungskraft des Federelementes erreichbar. Mittels einer Flügelmutter und/oder Flügelschraube ist eine werkzeuglose und damit schnelle Anpassung der Vorspannkraft realisierbar.

**In** einer Weiterbildung des erfindungsgemäßen Scheibenschars ist zumindest eines der Abstreiferelemente, insbesondere mittels der Spannvorrichtung, zumindest teilweise elastisch verformbar ist. Mittels der, insbesondere elastischen, Verformung ist somit eine erhöhte Stand- und/oder Einsatzzeit des zumindest einen Abstreiferelementes und/oder der Scheibe erreichbar. Besonders bevorzugt ist hierbei ein als Biegeblechteil ausgebildetes Abstreiferelement das infolge einer daran angreifenden Kraft zumindest abschnittsweise, insbesondere elastisch, verformbar ist. Die Kraft resultiert hierbei beispielsweise aus der Vorspannung der zumindest einen Spannvorrichtung und/oder der in Kontakt stehenden Scheibe. Darüber hinaus ist die besonders günstige Herstellung und das besonders niedrige Gewicht des zumindest einen als Biegeblechteil ausgebildeten Abstreiferelementes besonders vorteilhaft. Des Weiteren ist je nach dem Biegegrad des Blechteils eine von der Biegung abhängige Anpassung des von der zumindest einen Scheibe und dem zumindest einen Abstreiferelements eingeschlossenen Winkels erreichbar. Anhaftungen, insbesondere vom Acker, auf der Scheibe sind somit mit der Auslegung eines spitzen Winkels zwischen Abstreiferelement und Scheibe besonders gut, insbesondere mit geringen Kräften, lösbar.

Alternativ oder zusätzlich kann das Abstreiferelement zumindest teilweise als, vorzugsweise metallisches, Umformteil, insbesondere als Schmiede- und/oder Prägteil, ausgebildet sein. Diese zeichnen sich durch ihre besonders hohe Eigenstabilität aus, durch die eine besonders lange Einsatzzeit des zumindest einen Abstreiferelementes erreichbar ist. Darüber hinaus sind mit einem, vorzugsweise metallischen, Umformteil komplexe Ausgestaltungsformen des Abstreiferelementes möglich. Alternativ oder zusätzlich ist außerdem ein aus zumindest teilweise einem elastischen Kunststoffmaterial hergestelltes Abstreiferelement denkbar. Abstreiferelemente aus einem Kunststoffmaterial sind besonders günstig und mit besonders niedrigem Gewicht herstellbar.

Erfindungsgemäß sind zumindest zwei der Abstreiferelemente einer Abstreiferbaugruppe, vorzugsweise lösbar, ineinander einsteckbar. Hierbei ist zumindest eines der Abstreiferelemente in zumindest jeweils ein anderes Abstreiferelement der Abstreiferbaugruppe einsteckbar. Die Verbindung zwischen den zumindest zwei Abstreiferelementen ist hierbei zumindest teilweise formschlüssig und/oder kraftschlüssig, insbesondere kraftübertragend, ausführbar, wobei darüber hinaus eine stoffschlüssige Verbindung denkbar ist. Bei einer formschlüssigen Verbindungsvariante umfasst wenigstens ein Abstreiferelement der Abstreiferbaugruppe an zumindest einem seiner Enden wenigstens einen Abschnitt der zumindest teilweise umgebogen ist. Das zumindest eine umgebogene Ende des zumindest einen Abstreiferelementes ist dabei in zumindest eine dafür vorgesehene Öffnung wenigstens eines anderen Abstreiferelementes einsteckbar. Hierbei ist eine Verbindungsvariante besonders vorteilhaft, die eine werkzeuglose Montage und/oder Demontage des zumindest einen Abstreiferelementes erlaubt. Somit ist das erfindungsgemäße Scheibenschar, insbesondere die Abstreiferbaugruppe, besonders einfach und kurzfristig anpassbar.

Des Weiteren ist eine Abstreiferbaugruppe denkbar, bei der zumindest ein Abstreiferelement alternativ oder zusätzlich mittels zumindest einer Schraubverbindung mit wenigstens einem anderen Abstreiferelement der Abstreiferbaugruppe verbindbar ist.

In einer anderen Weiterbildung des erfindungsgemäßen Scheibenschars weist zumindest ein Abstreiferelement wenigstens eine Lasche auf, wobei das Abstreiferelement über die Lasche form- und/oder kraftschlüssig mit dem Scharhalter koppelbar ist. Die Verbindung zwischen dem zumindest einen Abstreiferelement, insbesondere der Lasche, und dem Scharhalter ist bevorzugt kraftübertragend und/oder starr ausgebildet. Somit ist das Abstreiferelement dazu eingerichtet, dem Scharhalter und/oder der Scheibe zumindest nahezu verzögerungsfrei in vertikaler und/oder horizontaler Richtung, aufgrund von beispielsweise Unebenheiten auf der landwirtschaftlichen Fläche, zu folgen. Eine besonders vorteilhafte Ausbildung der Verbindung zwischen der Lasche und dem Scharhalter ist mittels zumindest einer lösbaren Schraubverbindung geschaffen. Somit ist im Bedarfsfall eine besonders einfache und/oder schnelle Austauschbarkeit der Abstreiferbaugruppe erreichbar.

Die zumindest eine Lasche ist hierbei zumindest teilweise an dem zumindest einen Abstreiferelement angeformt. Alternativ oder zusätzlich kann die wenigstens eine Lasche zumindest teilweise form- und/oder kraft- und/oder stoffschlüssig mit dem Abstreiferelement verbunden sein. Darüber hinaus ist auch eine an das zumindest eine Abstreiferelement angeschraubte und/oder daran mittels einer Schraubverbindung verbundene Lasche denkbar. Besonders bevorzugt ist eine Lasche die zumindest einen Ausschnitt und/oder eine Bohrung aufweist, mittels der diese mit dem Scharhalter verbindbar ist.

In einer weiteren bevorzugten Ausführungsform des erfindungsgemäßen Scheibenschars umfasst die Abstreiferbaugruppe zumindest ein elastisches Element, vorzugsweise ein Elastomer, wobei das zumindest eine elastische Element zwischen der Lasche und dem Scharhalter angeordnet ist. Besonders bevorzugt ist ein elastisches Element das zumindest teilweise scheibenförmig und/oder einteilig ausgebildet. Alternativ oder zusätzlich hierzu ist auch ein mehrteiliges elastisches Element und/oder mehrere aneinander angereihte elastische Elemente denkbar. Das zumindest eine elastische Element ist dazu eingerichtet, Vibrationen, die von dem zumindest einen Scharhalter und/oder der zumindest einen Scheibe auf das wenigstens eine Abstreiferelement übertragbar sind, zumindest teilweise zu kompensieren und/oder aufzunehmen. Das elastische Element kann hierbei beispielsweise aus einem Kunstoff- und/oder Gummimaterial ausgebildet sein.

In einer weiteren Weiterbildung des erfindungsgemäßen Scheibenschars weist zumindest ein Abstreiferelement wenigstens ein abgewinkeltes Endstück auf, wobei das wenigstens eine abgewinkelte Endstück zumindest teilweise, vorzugsweise kraftübertragend, am Scharhalter anliegt. Das zumindest eine abgewinkelte Endstück ist mit dem Abstreiferelement verbindbar und/oder zumindest teilweise an dem Abstreiferelement angeformt. Das abgewinkelte Endstück ist bevorzugt in eine von der Längsachse des Abstreiferelementes abgewandten Richtung umgebogen. Der im Bereich des abgewinkelten Endstücks gebildete Querschnitt des Abstreiferelementes kann hierbei im Wesentlichen L-und/oder Z-förmig ausgebildet sein. Bei einer L-förmigen Ausführung des Querschnitts ist der zumindest eine Abschnitt im Wesentlichen quer zur längs Richtung des Abstreiferelementes ausgebildet. Bei dem Z-förmigen Querschnitt weist das abgewinkelte Endstück zumindest einen weiteren Abschnitt auf, der zumindest nahezu in längs Richtung des Abstreiferelementes angeformt ist. Somit ist eine im Wesentlichen vertikale und/oder in Fahrtrichtung des landwirtschaftlichen Arbeitsgerätes gerichtete Kraft, die in zumindest ein Abstreiferelement einleitbar ist, über das zumindest eine abgewinkelte Endstück in den Scharhalter zumindest teilweise übertragbar. Darüber hinaus ist mittels des an dem Abstreiferelement, vorzugsweise durch Biegung, ausgebildeten Endstücks eine zusätzliche Versteifung des Abstreiferelementes bei zumindest nahezu gleichbleibendem Gewicht realisierbar.

Außerdem ist denkbar, dass zu einer weiteren Kompensation von Vibrationen und/oder mechanischen Belastungen zumindest ein weiteres elastisches Element zwischen dem Scharhalter und dem zumindest einem abgewinkelten Endstück angeordnet ist.

Darüber hinaus ist ein erfindungsgemäßes Scheibenschar bevorzugt bei dem wenigstens ein Abstreiferelement, vorzugsweise an zumindest einem seiner Endbereiche, zumindest teilweise aus einem nahezu verschleißfesten Werkstoff ausgebildet ist. Das Abstreiferelement umfasst hierbei zumindest einen Abschnitt, vorzugsweise an seiner Oberfläche, der eine besonders hohe Härte aufweist. Der Endbereich ist bevorzugt an einem zumindest einer Scheibe des Scheibenschars zugeordneten Ende des Abstreiferelementes angeordnet. Der zumindest eine Bereich und/oder die Oberfläche des Abstreiferelementes ist hierbei zumindest teilweise gehärtet, insbesondere austenitisiert und/oder nitriert, ausgebildet. Unter dem Austenitisieren werden hierbei Härteverfahren wie beispielsweise das Flammhärten, Induktionshärten, Laserstrahlhärten und/oder das Elektronenstrahlhärten verstanden. Das Nitrieren beinhaltet unter anderem ein Härten des Werkstoffes durch die zusätzliche Einbringung von Stickstoff in ein metallisches Gefüge. Somit ist zumindest ein Abstreiferelement mit besonders hoher Abriebsfestigkeit und/oder Schlagfestigkeit und damit langer Verwendbarkeit und/oder Betriebssicherheit erreicht.

In einer anderen bevorzugten Ausführungsform des erfindungsgemäßen Scheibenschars weist wenigstens ein Abstreiferelement, vorzugsweise an zumindest einem seiner Endbereiche, zumindest ein Verschleißschutzelement aus einem nahezu verschleißfesten Werkstoff auf. Das wenigstens eine Abstreiferelement umfasst hierbei zumindest an einem seiner Seiten wenigstens ein auf der Oberfläche angeordnetes und/oder an den Endbereich anschließendes Verschleißschutzelement auf. Das Verschleißschutzelement ist hierbei zumindest teilweise form- und/oder kraft- und/oder stoffschlüssig mit dem Abstreiferelement verbunden. Besonders vorteilhaft ist eine Verbindung die zumindest teilweise aus einer Schraub- und/oder Schweiß- und/oder Klebeverbindung ausgebildet ist. Mittels dieser Ausführung ist eine besonders kostengünstige Variante eines nahezu verschleißfesten Abstreiferelementes mit hoher Betriebssicherheit erreicht. Das Verschleißschutzelement ist hierbei derart angeordnet, dass im Wesentlichen nur der Bereich des Abstreiferelementes mittels des Verschleißschutzelementes überdeckt ist, der mit der Scheibe korrespondiert und/oder zumindest teilweise in Kontakt steht. Durch eine lösbare Verbindung zwischen dem zumindest einen Verschleißschutzelement und dem Abstreiferelement ist das Verschleißschutzelement flexibel, vorzugsweise einzeln, je nach Bedarf austauschbar.

Bei einer besonders bevorzugten Ausführungsform des erfindungsgemäßen Scheibenschars ist der verschleißfeste Werkstoff ein Hartstoffmaterial, insbesondere Hartmetall. Das Hartstoffmaterial ist in vorteilhafter Weise zumindest teilweise gesintert ausgeführt. Somit ist eine weiter gesteigerte Abriebfestigkeit und/oder Schlagfestigkeit des Abstreiferelementes erzielbar.

In einer besonders bevorzugten Weiterbildung des erfindungsgemäßen Scheibenschars weist wenigstens ein Abstreiferelement, vorzugsweise an zumindest einem seiner Endbereiche, zumindest teilweise eine nahezu verschleißfeste Beschichtung auf. Unter der Beschichtung ist das Aufbringen eines Werkstoffes auf dem zumindest einen Abstreiferelement zu verstehen, wobei der Werkstoff der Beschichtung vorzugsweise von dem Werkstoff des Abstreiferelementes abweicht. Die Beschichtung ist dazu eingerichtet, dass Abstreiferelement zumindest teilweise gegen Verschleiß und/oder Korrosion zu schützen. Der Werkstoff der Beschichtung kann hierbei aus einem metallischen und/oder keramischen Werkstoff bestehen. Alternativ und/oder zusätzlich kann der Werkstoff der Beschichtung ein Kunststoffmaterial umfassen und/oder aus Kunststoff ausgebildet sein. Besonders vorteilhaft ist hierbei ein schlag- und/oder kratzfestes, insbesondere elastisches, Material.

Die der Erfindung zugrunde liegende Aufgabe wird ferner durch ein landwirtschaftliches Arbeitsgerät der eingangs genannten Art gelöst, wobei zumindest ein Scheibenschar nach einer der vorstehenden beschriebenen Ausführungsformen ausgebildet ist. Hinsichtlich der Vorteile und Modifikationen des erfindungsgemäßen landwirtschaftlichen Arbeitsgerätes wird zunächst auf die Vorteile und Modifikationen des erfindungsgemäßen Scheibenschars verwiesen.

Weitere Einzelheiten der Erfindung sind der Beispielsbeschreibung und den Zeichnungen zu entnehmen. Die Zeichnungen zeigen
- Fig. 1: ein landwirtschaftliches Arbeitsgerät mit mehreren erfindungsgemäßen Scheibenscharen in einer perspektivischen Darstellung;
- Fig. 2: ein erfindungsgemäßes Scheibenschar mit Abstreiferelementen an einer Reiheneinheit des landwirtschaftlichen Arbeitsgerätes aus Fig. 1 in einer perspektivischen Detaildarstellung; und
- Fig. 3: das erfindungsgemäße Scheibenschar mit Abstreiferelementen aus Fig. 2 in einer Vorderansicht.

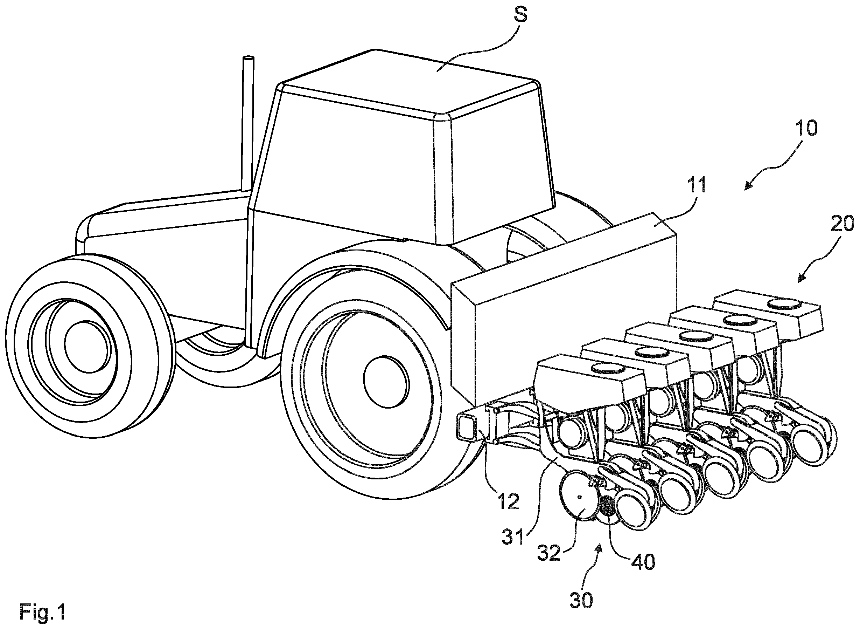

Ein von einem Schlepper S gezogenes landwirtschaftliches Arbeitsgerät 10 zur Bearbeitung einer landwirtschaftlichen Fläche ist in der Fig. 1 gezeigt. Das als Sämaschine ausgebildete landwirtschaftliche Arbeitsgerät 10 umfasst neben einem zentralen Vorratsbehälter 11, zur Bevorratung von Saatgut und/oder Dünger, mehrere an einem Rahmen 12 angeordnete Reiheneinheiten 20.

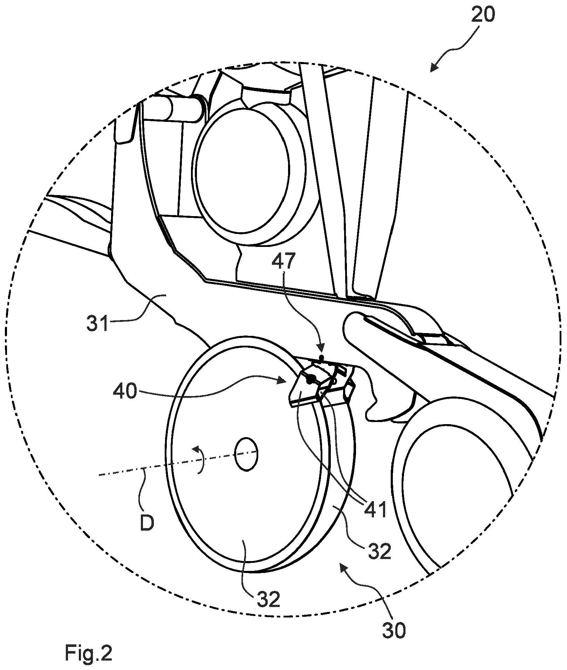

Die in Fig. 2 in Detailansicht dargestellte Reiheneinheit 20 umfasst ein als Doppelscheibenschar ausgeführtes Scheibenschar 30 das zwei an einem Scharhalter 31 drehbar gelagerte Scheiben 32 aufweist. Darüber hinaus umfasst das Scheibenschar 30 jeweils eine den Scheiben 32 zugeordnete Abstreiferbaugruppe 40 die dazu eingerichtet ist, von der landwirtschaftlichen Fläche, insbesondere einem Acker, an der Scheibe 32 anhaftende Rückstände zumindest teilweise von der Scheibe 32 zu lösen. Die Abstreiferbaugruppe 40 ist hierbei aus zwei einzelnen als Biegeblechteil ausgeführten Abstreiferelementen 41 ausgebildet, wobei jeder Seite der Scheibe 32 jeweils ein Abstreiferelement 41 zugeordnet ist. Die Abstreiferelemente 41 erstrecken sich hierbei im Wesentlichen soweit vom Außenradius in Richtung einer Drehachse D der Scheibe 32, so dass insbesondere der in den Boden eingreifende Bereich der Scheibe 32 mit den Abstreiferelementen 41 in Kontakt steht und somit von Anhaftungen befreit werden kann.

Die in der Fig. 2 gezeigte Ausführungsform eines als Biegeblechteil ausgeführten Abstreiferelementes 41 ist beispielhaft und auf diese Ausführungsform nicht beschränkt. Alternativ oder zusätzlich kann das zumindest eine Abstreiferelement 41 hierbei zumindest teilweise als, vorzugsweise metallisches, Umformteil, insbesondere als Schmiede und/oder Prägteil, und/oder als Kunststoffteil ausgeführt sein.

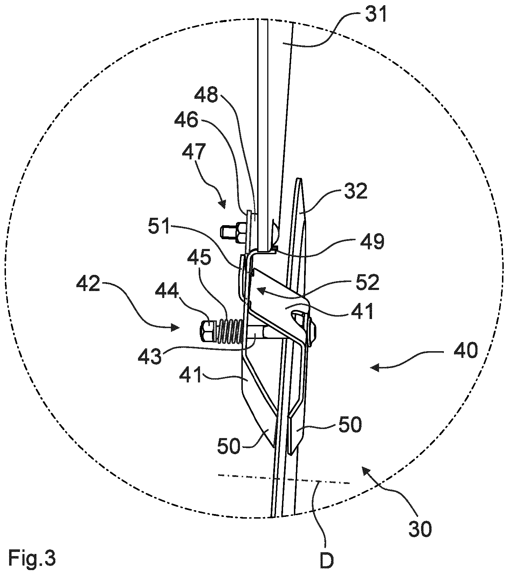

Wie die Fig. 3 zeigt, ist die Abstreiferbaugruppe 40 im Wesentlichen U-förmig und dabei zusammendrückbar um die Scheibe 32 angeordnet. Eine Spannvorrichtung 42 die aus zumindest einer Schraube 43, einer Schraubenmutter 44 und einem Federelement 45 gebildet ist, ist quer zur Scheibe 32 innerhalb der Abstreiferbaugruppe 40 angeordnet und dazu eingerichtet, die Abstreiferelemente 41 zumindest teilweise elastisch zu verformen und mit einem einstellbaren Druck gegen die Scheibe 32 zu drücken. Der Druck ist hierbei mittels der Schraube 43 und/oder der Schraubenmutter 44 besonders einfach von einem Bediener, vorzugsweise mittels eines Werkzeuges, einstellbar, wobei mittels des Werkzeuges ein besonders hoher Druck zwischen den Abstreiferelementen 41 und der Scheibe 32 erreichbar ist. Mittels des als Schraubenfeder ausgeführten Federelementes 45, das zwischen der Schraubenmutter 44 und einem der Abstreiferelemente 41 angeordnet ist, ist die Spannvorrichtung 42 außerdem dazu eingerichtet, den von den Abstreiferelementen 41 einstellbaren Druck auf die jeweiligen Seiten der Scheibe 32 selbsttätig nachzustellen. Somit ist während dem Bearbeiten der landwirtschaftlichen Fläche eine besonders hohe Betriebssicherheit des Scheibenschars 30 erreicht.

Alternativ oder zusätzlich zur gezeigten Ausführungsform des Federelementes 45, kann das Federelement 45 auch als Blatt- und/oder Tellerfederelement mit vorzugsweise besonders hohen Federraten ausgebildet sein. Darüber hinaus ist ein als elastisches Kunststofffederelement, insbesondere als Gummifeder, ausgebildetes Federelement 45 mit schwingungsdämpfenden Eigenschaften denkbar.

Die Abstreiferelemente 41 jeweils einer Abstreiferbaugruppe 40 sind derart ausgebildet, dass sie lösbar ineinander einsteckbar sind. Zumindest eines der Abstreiferelemente 41 weist hierbei zumindest einen zumindest teilweise umgebogenen Endabschnitt 51 auf, der in eine dafür vorgesehene Öffnung 52 an dem anderen Abstreiferelement 41 einsteckbar ist. Somit ist erreicht, dass die Abstreiferbaugruppe 40 nur durch jeweils eines der ineinander einsteckbaren Abstreiferelemente 41 mittels einer Lasche 46, die an einem der Abstreiferelemente 41 angeformt ist, mit dem Scharhalter 31 koppelbar ist. Die form- und/oder kraftschlüssige Verbindung zwischen der Abstreiferbaugruppe 40 und dem Scharhalter 31 ist in diesem Beispiel als lösbare Schraubenverbindung 47 ausgebildet, wobei zwischen dem Scharhalter 31 und der Lasche 46 ein als Elastomer ausgebildetes elastisches Element 48 angeordnet ist. Mittels des elastischen Elementes 48 sind die zwischen dem Scharhalter 31 und der Abstreiferbaugruppe 40 übertragbaren Vibrationen stark reduzierbar. Somit ist eine besonders materialschonende Verbindung zwischen dem Scharhalter 31 und der Abstreiferbaugruppe 40 erreicht.

Darüber hinaus umfasst das die Lasche 46 aufweisende Abstreiferelement 41 ein abgewinkeltes Endstück 49, welches in eine der Längsachse des Abstreiferelementes 41 abweisenden Richtung umgebogen ist und zumindest teilweise an dem Scharhalter 31 anliegt. Durch die mittels des abgewinkelten Endstücks 49 erreichte zusätzliche kraftübertragende Verbindung, zwischen dem Abstreiferelement 41 und dem Scharhalter 31, ist insbesondere eine in Fahrtrichtung und/oder vertikal nach oben zu den Abstreiferelementen 41 angreifende Kraft in den Scharhalter 31 zumindest teilweise übertragbar. Darüber hinaus weist ein durch Umbiegung ausgeführtes abgewinkeltes Endstück 49 eine Steifigkeits- und/oder Festigkeitserhöhung des Abstreiferelementes 41 bei zumindest nahezu gleich bleibendem Gewicht auf.

Außerdem umfassen die Abstreiferelemente 41 zumindest einen Endbereich 50 der mit der Scheibe 32 zumindest teilweise in Berührung steht und dabei zusätzlich aus einem nahezu verschleißfesten Werkstoff ausgebildet ist. Alternativ oder zusätzlich ist hierbei auch ein Aufbringen einer verschleißfesten Beschichtung und/oder eines Verschleißschutzelementes denkbar. Diese sind in vorteilhafter Weise dazu eingerichtet, den zumindest einen Endbereich 50 wenigstens eines Abstreiferelementes 41 zumindest teilweise vor Verschleiß und/oder Korrosion zu schützen. Hierbei ist als verschleißfester Werkstoff ein zumindest nahezu abrieb- und/oder schlagfestes Hartstoffmaterial, insbesondere Hartmetall, zu verstehen. Mit dieser Maßnahme lässt sich insbesondere die Standzeit der Abstreiferelemente 41 signifikant steigern.

### Bezugszeichenliste

- 10: landwirtschaftliches Arbeitsgerät
- 11: Vorratsbehälter
- 12: Rahmen
- 20: Reiheneinheiten
- 30: Scheibenschar
- 31: Scharhalter
- 32: Scheiben
- 40: Abstreiferbaugruppe
- 41: Abstreiferelement
- 42: Spannvorrichtung
- 43: Schraube
- 44: Schraubenmutter
- 45: Federelement
- 46: Lasche
- 47: Schraubenverbindung
- 48: elastisches Element
- 49: Endstück
- 50: Endbereiche
- 51: Abschnitt
- 52: Öffnung

- D: Drehachse
- S: Schlepper

## Patentansprüche

1. Scheibenschar (30) für ein landwirtschaftliches Arbeitsgerät (10), insbesondere eine Sämaschine und/oder ein Bodenbearbeitungsgerät, umfassend zumindest einen Scharhalter (31), zumindest eine an dem Scharhalter (31) drehbar gelagerte Scheibe (32), und zumindest zwei Abstreiferelemente (41) die jeweils einer Seite der Scheibe (32) zugeordnet sind, wobei zumindest zwei Abstreiferelemente (41) zu einer Abstreiferbaugruppe (40), vorzugsweise U-förmig, zusammengefasst sind, und wobei die Abstreiferelemente (41) mittels zumindest einer Spannvorrichtung (42), vorzugsweise mit einstellbaren Druck, gegen die Scheibe (32), zusammendrückbar ausgebildet sind, und wobei die Spannvorrichtung (42) mittels zumindest eines Federelementes (45) dazu eingerichtet ist, den von den Abstreiferelementen (41) ausgeübten Druck auf die Scheibe (32) selbsttätig nachzustellen, **dadurch gekennzeichnet, dass** zumindest zwei der Abstreiferelemente (41) einer Abstreiferbaugruppe (40), vorzugsweise lösbar, ineinander einsteckbar sind.

2. Scheibenschar (30) nach Anspruch 1, **dadurch gekennzeichnet, dass** die Spannvorrichtung (42) neben dem zumindest einen Federelement (45) zumindest eine Schraube (43) und eine Schraubenmutter (44) umfasst, wobei das Federelement (45) vorzugsweise zwischen dem zumindest einen Abstreiferelement (41) und der Schraube (43) und/oder der Schraubenmutter (44) angeordnet ist.

3. Scheibenschar (30) nach zumindest einem der vorgenannten Ansprüche, **dadurch gekennzeichnet, dass** zumindest eines der Abstreiferelemente (41), insbesondere mittels der Spannvorrichtung, zumindest teilweise elastisch verformbar ist.

4. Scheibenschar (30) nach zumindest einem der vorgenannten Ansprüche, **dadurch gekennzeichnet, dass** zumindest ein Abstreiferelement (41) wenigstens eine Lasche (46) aufweist, dass das Abstreiferelement (41) über die Lasche (46) form- und/oder kraftschlüssig mit dem Scharhalter (31) koppelbar ist.

5. Scheibenschar (30) nach zumindest einem der vorgenannten Ansprüche, **dadurch gekennzeichnet, dass** die Abstreiferbaugruppe (40) zumindest ein elastisches Element (48), vorzugsweise ein Elastomer, umfasst, wobei das zumindest eine elastische Element (48) zwischen der Lasche (46) und dem Scharhalter (31) angeordnet ist.

6. Scheibenschar (30) nach zumindest einem der vorgenannten Ansprüche, **dadurch gekennzeichnet, dass** zumindest ein Abstreiferelement (41) wenigstens ein abgewinkeltes Endstück (49) aufweist, wobei das wenigstens eine abgewinkelte Endstück (49) zumindest teilweise, vorzugsweise kraftübertragend, am Scharhalter (31) anliegt.

7. Scheibenschar (30) nach zumindest einem der vorgenannten Ansprüche, **dadurch gekennzeichnet, dass** wenigstens ein Abstreiferelement (41), vorzugsweise an zumindest einem seiner Endbereiche (50), zumindest teilweise aus einem nahezu verschleißfesten Werkstoff ausgebildet ist.

8. Scheibenschar (30) nach zumindest einem der vorgenannten Ansprüche, **dadurch gekennzeichnet, dass** wenigstens ein Abstreiferelement (41), vorzugsweise an zumindest einem seiner Endbereiche (50), zumindest ein Verschleißschutzelement aus einem nahezu verschleißfesten Werkstoff aufweist.

9. Scheibenschar (30) nach zumindest einem der vorgenannten Ansprüche 7 - 8, **dadurch gekennzeichnet, dass** der verschleißfeste Werkstoff ein Hartstoffmaterial, insbesondere Hartmetall, ist.

10. Scheibenschar (30) nach zumindest einem der vorgenannten Ansprüche 1 - 6, **dadurch gekennzeichnet, dass** wenigstens ein Abstreiferelement (41), vorzugsweise an zumindest einem seiner Endbereiche (50), zumindest teilweise eine nahezu verschleißfeste Beschichtung aufweist.

11. Landwirtschaftliches Arbeitsgerät (10), insbesondere Sämaschine und/oder Bodenbearbeitungsgerät, umfassend zumindest ein Scheibenschar (30), **dadurch gekennzeichnet, dass** das Scheibenschar (30) nach einem der vorstehenden Ansprüche ausgeführt ist.

## Claims

1. Disk colter (30) for an agricultural implement (10), in particular a sowing machine and/or a soil tillage implement, comprising at least one colter holder (31), at least one disk (32) rotatably mounted on the colter holder (31), and at least two scraper elements (41), each of which is assigned to one side of the disk (32), at least two scraper elements (41) being combined to form a scraper assembly (40), preferably U-shaped, and the scraper elements (41) being designed to be compressible against the disk (32) by means of at least one tensioning device (42), preferably with adjustable pressure, and the tensioning device (42) being set up by means of at least one spring element (45) to automatically adjust the pressure exerted by the scraper elements (41) on the disk (32), **characterized in that** at least two of the scraper elements (41) of a scraper assembly (40) can be inserted into one another, preferably detachably.

2. Disk colter (30) according to claim 1, **characterized in that** the tensioning device (42) comprises at least one screw (43) and at least one screw nut (44) in addition to the at least one spring element (45), the spring element (45) being arranged preferably between the at least one scraper element (41) and the screw (43) and/or the screw nut (44).

3. Disk colter (30) according to at least one of the preceding claims, **characterized in that** at least one of the scraper elements (41) is at least partially elastically deformable, in particular by means of the tensioning device.

4. Disk colter (30) according to at least one of the preceding claims, **characterized in that** at least one scraper element (41) has at least one tab (46), **in that** the scraper element (41) can be coupled to the colter holder (31) in a form-fitting and/or force-fitting manner via the tab (46).

5. Disk colter (30) according to at least one of the preceding claims, **characterized in that** the scraper assembly (40) comprises at least one elastic element (48), preferably an elastomer, the at least one elastic element (48) being arranged between the tab (46) and the colter holder (31).

6. Disk colter (30) according to at least one of the preceding claims, **characterized in that** at least one scraper element (41) has at least one angled end piece (49), the at least one angled end piece (49) at least partly resting on the colter holder (31), preferably in a force-transmitting manner.

7. Disk colter (30) according to at least one of the preceding claims, **characterized in that** at least one scraper element (41), preferably on at least one of its end regions (50), is at least partly made of a virtually wear-resistant material.

8. Disk colter (30) according to at least one of the preceding claims, **characterized in that** at least one scraper element (41), preferably on at least one of its end regions (50), has at least one wear protection element made of a virtually wear-resistant material.

9. Disk colter (30) according to at least one of the preceding claims 7-8, **characterized in that** the wear-resistant material is a hard material, in particular hard metal.

10. Disk colter (30) according to at least one of the preceding claims 1-6, **characterized in that** at least one scraper element (41), preferably on at least one of its end regions (50), at least partly has a virtually wear-resistant coating.

11. Agricultural implement (10), in particular sowing machine and/or soil tillage implement, comprising at least one disk colter (30), **characterized in that** the disk colter (30) is designed according to any of the preceding claims.

## Revendications

1. Soc (30) à disques pour un engin de travail agricole (10), en particulier un semoir et/ou un engin de travail du sol, comprenant au moins un support (31) de soc, au moins un disque (32) monté rotatif sur le support (31) de soc et au moins deux éléments racleurs (41) qui sont associés respectivement à un côté du disque (32), au moins deux éléments racleurs (41) étant réunis en un module racleur (40), de préférence en forme de U, et les éléments racleurs (41) étant réalisés de manière à pouvoir être comprimés contre le disque (32) au moyen d'au moins un dispositif de serrage (42), de préférence à l'aide d'une pression réglable, et le dispositif de serrage (42) étant conçu pour ajuster automatiquement, au moyen d'au moins un élément de ressort (45), la pression exercée par les éléments racleurs (41) sur le disque (32), **caractérisé en ce qu'au** moins deux des éléments racleurs (41) d'un module racleur (40) peuvent être emboîtés l'un dans l'autre, de préférence de manière amovible.

2. Soc (30) à disques selon la revendication 1, **caractérisé en ce que** le dispositif de serrage (42) comprend, outre l'au moins un élément de ressort (45), au moins une vis (43) et un écrou (44), l'élément de ressort (45) étant de préférence disposé entre l'au moins un élément racleur (41) et la vis (43) et/ou l'écrou (44).

3. Soc (30) à disques selon au moins l'une des revendications susmentionnées, **caractérisé en ce qu'au** moins l'un des éléments racleurs (41) est au moins partiellement déformable élastiquement, en particulier au moyen du dispositif de serrage.

4. Soc (30) à disques selon au moins l'une des revendications susmentionnées, **caractérisé en ce qu'au** moins un élément racleur (41) présente au moins une patte (46), **en ce que** l'élément racleur (41) peut être accouplé au support (31) de soc par l'intermédiaire de la patte (46) par complémentarité de forme et/ou à force.

5. Soc (30) à disques selon au moins l'une des revendications susmentionnées, **caractérisé en ce que** le module racleur (40) comprend au moins un élément élastique (48), de préférence un élastomère, l'au moins un élément élastique (48) étant disposé entre la patte (46) et le support (31) de soc.

6. Soc (30) à disques selon au moins l'une des revendications susmentionnées, **caractérisé en ce qu'**au moins un élément racleur (41) présente au moins une pièce d'extrémité coudée (49), l'au moins une pièce d'extrémité coudée (49) s'appuyant au moins partiellement, de préférence avec un transfert de force, sur le support (31) de soc.

7. Soc (30) à disques selon au moins l'une des revendications susmentionnées, **caractérisé en ce qu'**au moins un élément racleur (41), de préférence au niveau d'au moins l'une de ses zones d'extrémité (50), est réalisé au moins partiellement à partir d'un matériau pratiquement résistant à l'usure.

8. Soc (30) à disques selon au moins l'une des revendications susmentionnées, **caractérisé en ce qu'**au moins un élément racleur (41) présente, de préférence au niveau d'au moins l'une de ses zones d'extrémité (50), au moins un élément de protection contre l'usure en un matériau pratiquement résistant à l'usure.

9. Soc (30) à disques selon au moins l'une des revendications 7 à 8 susmentionnées, **caractérisé en ce que** le matériau résistant à l'usure est un matériau dur, en particulier un métal dur.

10. Soc (30) à disques selon au moins l'une des revendications 1 à 6 susmentionnées, **caractérisé en ce qu'**au moins un élément racleur (41) présente, de préférence au niveau d'au moins l'une de ses zones d'extrémité (50), au moins partiellement un revêtement pratiquement résistant à l'usure.

11. Engin de travail agricole (10), en particulier semoir et/ou engin de travail du sol, comprenant au moins un soc (30) à disques, **caractérisé en ce que** le soc (30) à disques est exécuté selon l'une des revendications précédentes.
